(19) **Europäisches Patentamt**

**European Patent Office**

**Office européen des brevets**

(11) **EP 1 096 275 A1**

(12) # DEMANDE DE BREVET EUROPEEN

(43) Date de publication:
**02.05.2001 Bulletin 2001/18**

(21) Numéro de dépôt: **00402705.8**

(22) Date de dépôt: **02.10.2000**

(51) Int Cl.[7]: **G02B 5/28**, G02B 5/18,
H04J 14/02, G02B 6/12,
G02B 6/16, G02B 6/34

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **28.10.1999 FR 9913495**

(71) Demandeur: **ALCATEL**
**75008 Paris (FR)**

(72) Inventeurs:
• **Bakhti, Fatima**
**91400 Orsay (FR)**
• **Sansonetti, Pierre**
**91120 Palaiseau (FR)**

(74) Mandataire: **Smith, Bradford Lee et al**
**COMPAGNIE FINANCIERE ALCATEL**
**Dépt. Propr. Industrielle,**
**30, avenue Kléber**
**75116 Paris (FR)**

(54) **Filtre optique à faible variation de dispersion chromatique**

(57)    L'invention propose un filtre optique à faible variation de dispersion chromatique sur la bande passante , formé d'un réseau de Bragg dont le pas varie en fonction de la distance le long du filtre avec un changement de sens de concavité. Le filtre présente en outre une apodisation, par exemple une apodiation par une fonction super-gaussienne ou une apodisation de Blackman.

Le filtre de l'invention est adapté à des systèmes de transmission à multiplexage en longueur d'onde dense à haut débit.

Figure 1

**Description**

L'invention concerne le domaine des filtres optiques, et plus particulièrement des filtres optiques utilisés pour l'ajout et la suppression de longueurs d'ondes dans les systèmes de transmission à fibre optique à multiplexage en longueur d'onde; ces filtres sont appelés filtres OADM, qui est l'acronyme de l'anglais "Optical Add and Drop Multiplexer".

Les transmissions à multiplexage en longueur d'onde utilisent des filtres optiques présentant une fonction de transfert aussi rectangulaire que possible, et susceptible d'être utilisés sur une large bande; typiquement, les multiplexeurs en longueur d'onde s'étendent autour de 1550 nm, sur une plage de longueur d'onde de 25 à 100 nm. Un filtre idéal devrait présenter une phase linéaire, et donc un temps de groupe constant, et aucune dispersion chromatique.

Il a été proposé d'utiliser à ces fins des réseaux de Bragg inscrits dans les fibres. Ces réseaux sont formés dans une fibre par des modulations périodiques, ou sensiblement périodiques de l'indice de la fibre; on appelle "pas" la période de modulation le long de la fibre. On peut à l'aide de réseaux de Bragg obtenir une réponse spectrale quasiment idéale, c'est-à-dire proche de celle qui est recherchée. Toutefois, dans ce cas, la réponse en phase du filtre est d'autant moins linéaire que l'on approche des bords du filtre, la dispersion est importante, de sorte que la largeur utile est en fait bien inférieure à celle du filtre.

Ainsi, L.R. Chen et P.W.E. Smith, Fibre Bragg grating transmission filters with near-ideal filter response, Electronics Letters, vol. 34 no 21, Oct. 98, pp. 2048-2050 propose des filtres moiré présentant un "chirp", c'est-à-dire une variation du pas le long du filtre. Plus précisément, cet article s'intéresse à la réponse en phase des filtres - vitesse de groupe constante et dispersion nulle - et propose d'utiliser un filtre formé de deux réseaux de Bragg superposé, présentant chacun un chirp linéaire.

Il a encore été proposé de procéder à une apodisation du filtre, c'est-à-dire une variation de l'indice de modulation de la fibre en fonction de la longueur de celle-ci. A titre d'exemple, T.A. Strasser et autres, UV-induced fiber grating OADM devices for efficient bandwidth utilization, OFC'96, PD8-2 à PDB-4 propose un filtre présentant une apodisation gaussienne, c'est-à-dire que l'enveloppe de la fonction de modulation de l'indice de la fibre est une gaussienne. Le filtre ne présente pas de chirp, et le pas de modulation est constant.

B.J. Eggleton et autres, Implications of fiber grating dispersion for WDM communication systems, IEEE Photonics Technology Letters, vol. 9 no. 10, Octobre 1997, pp. 1403-1405, indique que l'apodisation est une solution permettant de réduire la diaphonie entre les canaux dans les filtres pour systèmes de transmission à fibre optique à multiplexage en longueur d'onde. Cet article soulève le problème de la dispersion chromatique provoquée par des filtres apodisés, et propose un compromis entre les caractéristiques du filtre et la dispersion induite par le filtre, dans le cas d'apodisation gaussienne ou super-gaussienne.

L'invention propose un filtre pour système de transmission à fibre optique à multiplexage en longueur d'onde, et notamment pour système de transmission à fibre optique à multiplexage en longueur d'onde dense (DWDM ou "dense WDM" en langue anglaise), qui présente à la fois une bonne réponse spectrale, mais aussi une dispersion acceptable dans la bande passante du filtre.

Plus précisément l'invention propose un réseau de Bragg de pas variable, caractérisé en ce que le pas est une fonction de la distance présentant une concavité vers le haut sur une première partie du réseau, et vers le bas sur une seconde partie du réseau.

De préférence, la fonction présente une pente nulle aux extrémités du réseau.

Dans un mode de réalisation, la première partie s'étend sur une moitié du réseau, et en ce que la deuxième partie s'étend sur l'autre moitié du réseau.

De préférence, le pas est une fonction quadratique de la distance sur la première partie, et une fonction quadratique de la distance sur la seconde partie.

Dans un autre mode de réalisation, le pas est sur la première partie une fonction polynomiale de la distance, de degré inférieur à 6, et sur la seconde partie une fonction polynomiale de la distance, de degré inférieur à 6.

Dans encore un autre mode de réalisation, le pas est une fonction linéaire de la distance sur une troisième partie du réseau s'étendant entre les dites première et seconde parties.

De préférence, la tangente à la courbe donnant le pas en fonction de la distance présente à chaque extrémité du réseau, sur une distance inférieure à 10% de la longueur L du réseau, une pente inférieure en valeur absolue à la moitié du rapport $(\Lambda_{max} - \Lambda_{min})/L$ entre la variation de pas et la longueur du réseau.

Dans un mode de réalisation, le réseau présente une variation de dispersion chromatique comprise dans une plage de $\pm 150$ ps/nm pour une plage de longueur d'onde égale à au moins la moitié de sa largeur à -3dB.

Il est aussi avantageux que le rapport entre la largeur à -3 dB et la largeur à -30 dB soit compris entre 0.5 et 1

Avantageusement, l'atténuation en réflexion à 25 GHz ou 50 GHz de la longueur d'onde centrale du filtre est supérieure à 30 dB, de préférence supérieure à 35 dB. En outre, l'atténuation en transmission à la longueur d'onde centrale du filtre est de préférence inférieure à 0,05 dB.

**EP 1 096 275 A1**

L'apodisation peut être une apodisation super-gaussienne, avec un coefficient a dans l'intervalle [0,5; 1], ou une apodisation de Blackman, avec un coefficient de Blackman dans l'intervalle ]0; 0,2[, ou encore une apodisation en tangente hyperbolique, avec un coefficient dans l'intervalle ]0; 1[.

L'invention propose aussi un filtre optique comprenant un tel réseau de Bragg, ainsi qu'un système de transmission à multiplexage en longueurs d'onde, comprenant au moins un tel réseau de Bragg.

D'autres caractéristiques et avantages de l'invention apparaîtront à la lecture de la description qui suit de modes de réalisation donnés à titre d'exemples uniquement, et en référence aux figures qui montrent :

- figure 1, un graphe de la modulation d'indice et du pas d'un filtre de l'invention;
- figure 2, un graphe de la réponse spectrale et de la dispersion du filtre de la figure 1;
- figures 3 à 7, un graphe de la réponse spectrale et de la dispersion d'autres filtres de l'invention;
- figure 8, un graphe de la réponse spectrale et de la dispersion d'un filtre avec une apodisation, et un pas constant;
- figure 9, un graphe de la réponse spectrale et de la dispersion d'un filtre avec une apodisation, et un pas variant linéairement;

Pour fournir un filtre présentant à la fois une bonne réponse spectrale et une dispersion acceptable, l'invention propose d'utiliser un réseau de Bragg, présentant un chirp ou une variation du pas en forme de S, autrement dit, avec un changement de signe de la dérivée seconde de la fonction qui à la position le long du filtre associe le pas du filtre. On pourrait aussi parler de changement de sens de concavité dans le graphe de cette même fonction. A ce chirp, on peut associer une forme d'apodisation, pour améliorer les caractéristiques spectrales du filtre; une telle apodisation du filtre permet typiquement de minimiser les lobes secondaires du filtre.

L'invention permet de fournir un filtre qui réfléchit au moins un canal et qui laisse passer les autres canaux. Les caractéristiques spectrales du filtre s'évaluent en réflexion, en considérant l'atténuation du filtre en dehors de la bande de réflexion; il est avantageux que les lobes secondaires soient atténués d'au moins 30 dB par rapport aux longueurs d'onde réfléchies. Dans le cas d'un filtre réfléchissant un seul canal, l'atténuation à 25 GHz ou 50 GHz est de préférence supérieure à 30 dB, voire supérieure à 35 dB. La valeur de 25 ou 50 GHz entre les canaux dépend de la répartition des canaux dans le multiplex. On peut aussi évaluer les caractéristiques spectrales du filtre en transmission, en considérant l'atténuation pour une longueur d'onde transmise, par rapport à la puissance appliquée en entrée du filtre. De préférence, cette atténuation est inférieure à 0,05 dB. En transmission, on peut encore considérer l'atténuation subie en transmission à la longueur d'onde du canal qui est réfléchi, par rapport aux longueurs d'onde transmises par le filtre. Il est avantageux dans ce cas que l'atténuation à la longueur d'onde réfléchie soit d'au moins 30 dB, voire 35 dB, par rapport aux longueurs d'onde voisines qui sont transmises. On peut encore dans ce cas considérer des valeurs de 25 ou 50 GHz entre les canaux.

En termes de raideur des flancs de la fonction de transfert du filtre, on peut considérer le rapport entre la bande du filtre à -3 db et la bande du filtre à -30 dB. Ce rapport est avantageusement aussi élevé que possible; des valeurs au dessus de 0,5, et de préférence au-dessus de 0,7 sont avantageuses.

Pour ce qui est de la dispersion, on peut considérer que la dispersion est acceptable lorsqu'il existe une valeur centrale $D_0$, autour de laquelle la dispersion varie dans la bande du filtre, et que la plage de variation de la dispersion autour de cette valeur centrale, typiquement dans une bande de $\pm$ 150 ps autour de la valeur centrale $D_0$ de dispersion.

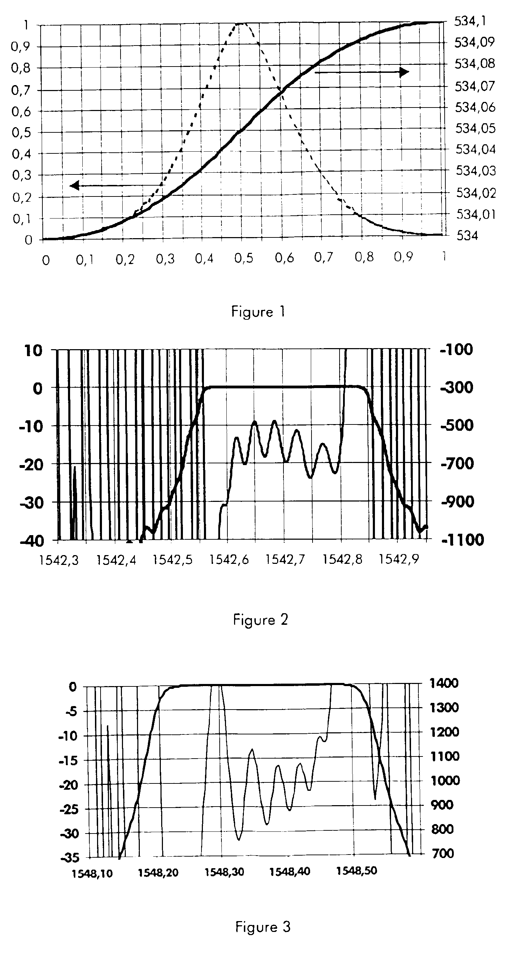

La figure 1 est un diagramme d'indice et de pas d'un filtre selon l'invention. On a porté en abscisse sur la figure la distance z/L le long du filtre. Cette distance est normalisée, z étant la position, et L la longueur totale du filtre. Apparaît en traits pointillés sur la figure la modulation de l'indice; l'échelle est portée en ordonnée sur la gauche. La modulation d'indice est normalisée, par rapport à valeur maximale de modulation de l'indice. Apparaît en traits pleins sur la figure le pas du réseau; l'échelle est portée en ordonnées sur la droite de la figure, en nanomètres. Il est clair que le pas n'est pas précisément une fonction continue, et que parler d'une fonction associant le pas à la distance le long du filtre est un abus de langage: on utilise pour la commodité de l'expression une telle fonction, comme cela est habituel dans le domaine technique.

La figure 1 montre que la variation du pas le long du réseau présente une forme de "S": en d'autres termes, le pas croît le long du réseau; sur une première partie, correspondant au début du réseau, la concavité est dirigée vers le haut, autrement dit la pente est croissante, et la dérivée seconde du pas par rapport à la distance est positive. Sur une deuxième partie, correspondant à la fin du réseau, sur la droite de la figure, la concavité est dirigée vers le bas, autrement dit la pente est décroissante et la dérivée seconde du pas par rapport à la distance est négative. Dans l'exemple de la figure, la dérivée seconde du pas s'annule au milieu du réseau. En outre, aux extrémités du réseau, la pente du pas est sensiblement nulle, autrement dit le pas ne varie que peu, en comparaison des variations par exemple au milieu du filtre.

On peut pour qualifier un chirp en forme de S utiliser le critère suivant : la tangente à la courbe donnant le pas en fonction de la distance présente à chaque extrémité du réseau, sur une distance inférieure à 10% de la longueur L du réseau, une pente inférieure en valeur absolue à la moitié du rapport $(\Lambda_{max} - \Lambda_{min})/L$ entre la variation de pas et la longueur du réseau.

Quantitativement, on peut utiliser une variation du pas du réseau donné par la fonction suivante :

$$\Lambda(z) = \begin{cases} \Lambda_{min} + az^2 & 0 \le z \le r_1 L \\ \dfrac{(\Lambda_{max} - \Lambda_{min} - a((r_1 L)^2 + (r2L)^2))}{(1 - r_1 - r_2)L}(z - r_1 L) + \Lambda_{min} + a(r_1 L)^2 & r_1 L \le z \le (1 - r_2)L \\ \Lambda_{max} - a(z - L)^2 & (1 - r_2)L \le z \le L \end{cases}$$

avec

$$a = \frac{\Lambda_{max} - \Lambda_{min}}{r_1(2 - r_1 - r_2)L^2}$$

et z la distance le long du filtre. z dans cette formule varie entre 0 et L, autrement dit n'est pas normalisée.

En d'autres termes, dans ce modèle de variation du pas du réseau, le pas varie d'abord sur une première partie du réseau comme une fonction quadratique, en partant de la valeur $\Lambda_{min}$, puis sur une troisième partie du réseau comme une fonction linéaire, et enfin sur une seconde partie du réseau comme une fonction quadratique pour atteindre la valeur $\Lambda_{max}$. Les coefficients $r_1$ et $r_2$ correspondent aux proportions sur lesquelles le pas varie de façon quadratique. On peut aussi considérer une fonction qui est un polynome de degré entre 2 et 5 sur la première partie, un polynome de degré compris entre 2 et 5 sur la seconde partie, et le cas échéant une fonction linéaire sur la première partie. Les concavités sont de sens inverse sur les première et seconde parties, comme indiqué plus haut.

Dans l'exemple de la figure, les coefficients $r_1$ et $r_2$ valent tous les deux 0,5 - c'est-à-dire que le pas varie d'abord comme une fonction quadratique à concavité vers le haut, puis ensuite comme une fonction quadratique à concavité vers le bas. Dans ce cas, la variation du pas du réseau est fournie par la formule :

$$\Lambda(z) = \begin{cases} \Lambda_{min} + az^2 & 0 \le z \le L/2 \\ \Lambda_{max} - a(z - L)^2 & L/2 \le z \le L \end{cases}$$

avec dans ce cas a = 2($\Lambda m_{ax}$ - $\Lambda_{min}$)/L². Ce paramètre unique détermine l'allure du chirp, dans la mesure où l'on impose que la pente du chirp est nulle aux deux extrémités. Le chirp est alors formé de deux paraboles de pente nulle aux extrémités du filtre.

Dans ce cas, la variation maximale du pas vaut $\Lambda_{max}$ - $\Lambda_{min}$, et la pente entre les abscisses 0 et L/10 ou entre les abscisses 9L/10 et L est inférieure en valeur absolue à 4($\Lambda_{max}$ - $\Lambda_{min}$)/(10.L).

La fonction d'apodisation représentée sur la figure est une fonction d'apodisation super-gaussienne, qui présente les caractéristiques suivantes :

$$\Delta n(z) = \Delta n_{max}\left(\frac{\Delta n_{min}}{\Delta n_{max}}\right)^{\left\{\frac{z - z_0}{max(z_0, L - z_0)}\right\}^{2a}}$$

Dans cette formule, $\Delta n_{max}$ est l'amplitude maximale de la variation locale de l'indice de réfraction, $\Delta n_{min}$ est l'amplitude minimale de la variation locale de l'indice de réfraction et $z_0$ est la position de cette amplitude maximale le long du filtre; cette position n'est pas normalisée. a est le paramètre de la super-gaussienne. Dans l'exemple de la figure, on a $z_0$ = L/2. Pour a= 1, on retrouve une gaussienne, et on appelle super-gaussienne les cas où a est différent de 1.

On choisit de préférence les paramètres d'apodisation dans les intervalles suivants:

$$10^{-4} \le \Delta n_{max} \le 10^{-3}$$

$$10^{-6} \leq \Delta n_{min} \leq 10^{-4}$$

Si l'on note K l'indice, qui s'écrit

$$K(z) = K_0 . \Delta n(z)$$

on a de préférence $\ln(K(z)/K_0)$ ou $\ln(\Delta n(z))$ qui est une fonction de z proche d'une fonction linéaire, sur l'intervalle [0; L/2] ou sur l'intervalle [L/2; 0]. Dans le cas d'une super-gaussienne, on a

$$\ln(K(z)/K_0) = \ln(\Delta n(z)) = \left( \frac{z - z_0}{max(z_0, L-z_0)} \right)^{2a}$$

Dans ce cas, $\ln(\Delta n(z))$ est une fonction linéaire de z dans le cas d'une gaussienne; pour une super-gaussienne, $\ln(\Delta n(z))$ n'est pas une fonction linéaire, mais on choisit avantageusement $0,5 \leq a < 1$. On obtient une fonction proche d'une fonction linéaire.

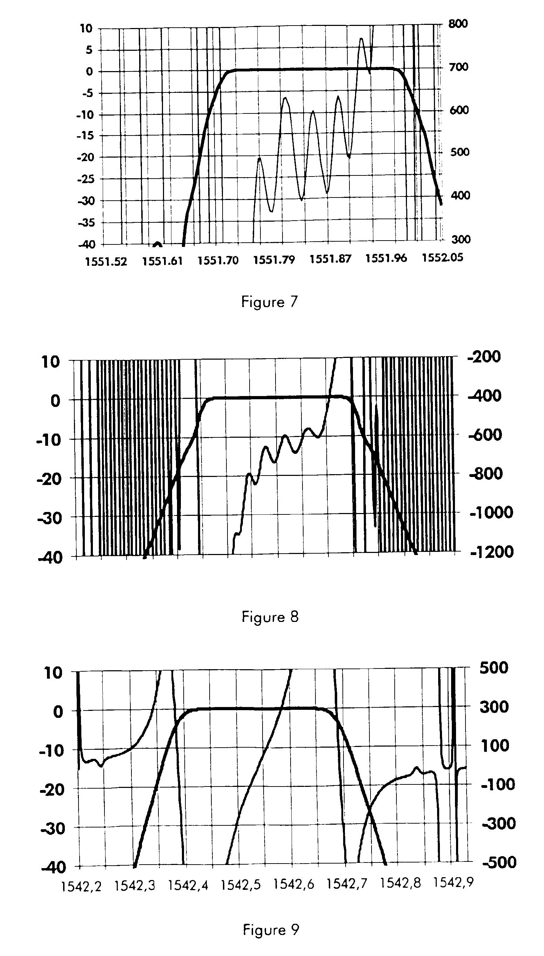

La figure 2 montre les caractéristiques spectrales et de dispersion du filtre de la figure 1. On a porté en abscisse la longueur d'onde, en nanomètres; le trait gras sur la figure montre la réponse spectrale du filtre, avec à gauche de la figure en ordonnée l'échelle en dB. On constate que le filtre présente une bande passante avec une atténuation nulle sur une bande de 0,3 nm de large, avec des bords raides : la largeur du filtre à -10 dB est de l'ordre de 0,33 nm. Est portée sur la figure en traits plus fin la dispersion chromatique, avec l'échelle en ps/nm sur la droite de la figure. Sur toute la bande entre 1542,61 nm et 1542,8 nm, la dispersion chromatique varie entre -500 et -700 ps/nm, et reste donc sensiblement constante, par rapport aux variations correspondantes des filtres de l'art antérieur. De la sorte, la largeur de bande utilisable dans le filtre est plus importante que dans les filtres de l'art antérieur, comme expliqué en référence aux figures 8 et 9.

La figure correspond au choix donnés ci-dessus de $r_1 = r_2 = 0,5$, avec a=0,8. Le filtre présente une longueur totale L de 50 mm; l'amplitude maximale de la modulation d'indice $\Delta n_{max}$ vaut $2,9.10^{-4}$, et l'amplitude minimale de la modulation d'indice $\Delta n_{min}$ vaut $10^{-6}$. $\Lambda_{min}$ et $\Lambda_{max}$ valent respectivement 534 nm et 534,1 nm. La fibre utilisée est une fibre fabriquée par Alcatel sous l'appellation "photosensitive cladding" (fibre à gaine photosensible).

Comme le montre la figure, l'invention permet d'obtenir un filtre présentant à la fois une bonne réponse spectrale et une dispersion acceptable. Sur plus de la moitié de la bande passante à 3 dB du filtre, la dispersion chromatique du filtre est constante, à $\pm$ 150 ps/nm, ou de préférence à $\pm$ 100 ps/nm, autour d'une valeur $D_0$ moyenne de dispersion chromatique de -600 ps/nm. En réflexion, l'atténuation pour les lobes secondaires à 50 GHz est supérieure ou égale à 40 dB. En transmission, l'atténuation à la longueur d'onde centrale, par rapport au canal voisin à 50 GHz est de 0,05 dB. Le rapport entre la bande à -3 dB et la bande à -30 dB est de 0,7.

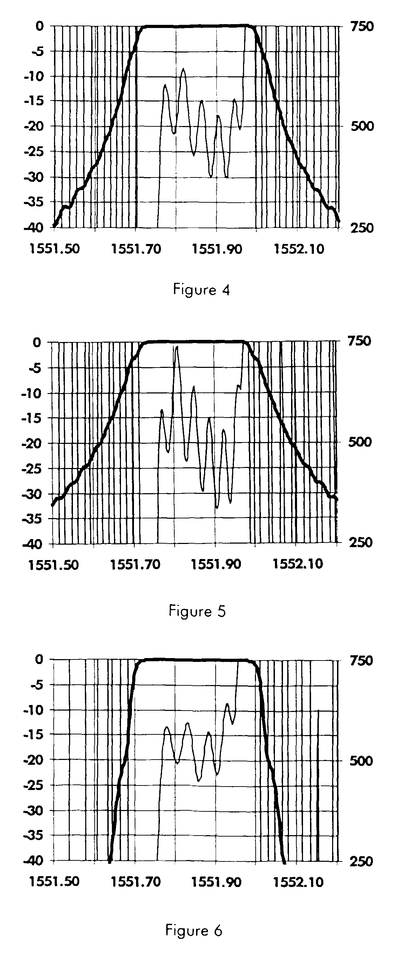

Les figures 3 à 7 montrent respectivement un graphe de la réponse spectrale et de la dispersion de filtres selon d'autres modes de réalisation de l'invention. La figure 4 montre un graphe de la réponse spectrale et de la dispersion d'un filtre selon l'invention, avec une autre fonction d'apodisation; les échelles sont les mêmes. Dans l'exemple de la figure 3, on utilise pour l'apodisation une fonction de Blackman, du type:

$$\Delta n(z) = \Delta n_{max} \frac{1 + (1+B)\cos\left\{ \frac{\pi(z - z_0)}{max(z_0, L - z_0)} \right\} + B\cos\left\{ \frac{2\pi(z - z_0)}{max(z_0, L - z_0)} \right\}}{2 + 2B}$$

B est le paramètre de Blackman; on le choisit de préférence entre dans l'intervalle [0; 0,2]. $\Delta n_{max}$ est la variation maximale de l'indice, et peut être choisie comme dans le cas de l'apodisation super-gaussiennne. $z_0$ est la position pour laquelle la valeur maximale d'apodisation est atteinte.

Dans l'exemple de la figure 3, le chirp du pas est identique à celui de la figure 2. Le coefficient de Blackman B vaut 0. La variation maximale d'indice $\Delta n_{max}$ vaut $1,7.10^{-4}$; la fibre de départ est la même que celle de la figure 2. Le réseau présente une longueur L de 50 mm,et $z_0$ vaut L/2. La dispersion chromatique varie autour d'une valeur $D_0$ de 980 ps/nm, dans une plage de $\pm$ 150 ps/nm, dans une bande entre 1551,83 et 1551,93 nm. En réflexion, l'atténuation pour les lobes secondaires à 50 GHz est de 31dB. En transmission, l'atténuation à la longueur d'onde centrale, par rapport au canal voisin à 50 GHz est inférieure ou égale à 0,05 dB. Le rapport entre la bande à -3 dB et la bande à

-30 dB est de 0,74.

Les figures 4, 5 et 6 montrent respectivement des filtres du même type que celui de la figure 2, avec une fonction d'apodisation supergaussienne. Elles diffèrent de la figure 2 par la valeur du coefficient a de la supergaussienne, qui vaut respectivement 0,7, 0,6 et 0,9. La fonction qui donne le chirp est comme dans le cas de la figure 2 une fonction quadratique sur chacune des deux moitiés du réseau.

Pour la figure 4, on considère un réseau d'une longueur de 45 mm, avec une variation d'indice $\Delta n_{max}$ - $\Delta n_{min}$ de 3.10$^{-4}$. Le rapport entre la bande à -3 dB et la bande à -30 dB est de 0,56. En réflexion, l'atténuation pour les lobes secondaires à 50 GHz est supérieure ou égale à 40 dB. En transmission, l'atténuation à la longueur d'onde centrale, par rapport au canal voisin à 50 GHz est inférieure ou égale à <0.05 dB. La dispersion chromatique varie autour d'une valeur $D_0$ de 500 ps/nm, dans une plage de $\pm$150 ps/nm, dans une bande entre 1551,75 et 1551,96nm.

Pour la figure 5, on considère un réseau d'une longueur de 50 mm, avec une variation d'indice $\Delta n_{max}$ - $\Delta n_{min}$ de 3,1.10$^{-4}$. Le rapport entre la bande à -3 dB et la bande à -30 dB est de 0,45. En réflexion, l'atténuation pour les lobes secondaires à 50 GHz est inférieure ou égale à 50 dB. En transmission, l'atténuation à la longueur d'onde centrale, par rapport au canal voisin à 50 GHz est inférieure ou égale à 0,05 dB. La dispersion chromatique varie autour d'une valeur $D_0$ de 500 ps/nm, dans une plage de $\pm$150 ps/nm, dans une bande entre 1551,81 et 1551,90nm. Elle varie dans une plage de $\pm$ 200 ps/nm autour de cette même valeur $D_0$, dans une bande de 1551,76 à 1551,97nm.

La figure 6 montre le cas d'un réseau de 40 mm de long, avec une variation d'indice $\Delta n_{max}$ - $\Delta n_{min}$ de 2,6.10$^{-4}$. Le rapport entre la bande à -3 dB et la bande à-30 dB est de 0,77. La dispersion chromatique varie dans une plage de $\pm$100 ps/nm de autour d'une valeur $D_0$ de 550 ps/nm, entre les longueurs d'onde 1551,76nm et 1551,97nm. En réflexion, l'atténuation pour les lobes secondaires à 50 GHz est supérieure ou égale à 40 dB. En transmission, l'atténuation à la longueur d'onde centrale, par rapport au canal voisin à 50 GHz est inférieure ou égale à 0,05 dB.

La figure 7 montre un graphe analogue à ceux des figures précédentes, pour une fonction d'apodisation du type tangente hyperbolique, qui peut être donnée par la formule suivante :

$$\Delta n_{ap}(z) = \Delta n_0 \left\langle 1 + \tanh \left\{ \beta \left( 1 - 2 \left| \frac{z - z_0}{\max[z_0, (L - z_0)]} \right|^{\alpha} \right) \right\} \right\rangle$$

où $\alpha$ est un coefficient positif,

$$\beta = \tanh^{-1} \left( \frac{\Delta n_{max} - \Delta n_{min}}{\Delta n_{max} + \Delta n_{min}} \right)$$

et

$$\Delta n_0 = \frac{\Delta n_{max}}{1 + \tanh(\beta)}$$

Dans le cas de la figure, le réseau présente une longueur de 45 mm, et la variation maximale d'indice $\Delta n_{max}$ est de 1,8.10$^{-4}$. Le paramètre $\alpha$ de la figure est de 0,5. La dispersion chromatique varie entre 1551,85 nm et 1551,93 nm dans une plage de $\pm$ 150 ps/nm de autour d'une valeur $D_0$ de 1000 ps/nm. Le rapport entre la bande à -3 dB et la bande à -30 dB est de 0,74. En réflexion, l'atténuation pour les lobes secondaires à 50 GHz est supérieure ou égale à 40 dB. En transmission, l'atténuation à la longueur d'onde centrale, par rapport au canal voisin à 50 GHz inférieure ou égale à 0,05 dB. Plus généralement, le paramètre a est de préférence dans l'intervalle ]0; 1 [.

Les filtres de l'invention peuvent être utilisés dans les systèmes de transmission à multiplexage à longueur d'onde, et notamment dans les systèmes dits "denses" à hauts débits avec des distances entre canaux de l'ordre de 25 ou 50 GHz. Un filtre selon l'invention peut être utilisé pour l'extraction d'un seul canal. On peut donc utiliser les filtres de l'invention, notamment comme filtres pour l'insertion ou l'extraction d'un canal, ou encore avant ou après des dispositifs de compensation de la dispersion optique.

Les figures 8 et 9 montrent à titre de comparaison, des graphes analogues à ceux des figures 2 à 7, pour des filtres qui ne mettent pas en oeuvre l'invention. On utilise dans les deux cas les mêmes notations, et les mêmes échelles. La figure 8 montre le cas d'un filtre avec une apodisation de Blackman, et un pas constant. Les paramètres sont les suivants:

- longueur L du filtre : 25 mm
- pas du filtre : 534 nm;
- largeur du filtre (mesurée à la moitié de l'amplitude maximale) : 0,3 nm;
- amplitude maximale de la modulation d'indice $\Delta n_{max}$ : 3,1.10$^{-4}$;
- coefficient de Blackman B : 0,3

La figure montre que la fonction de transfert du filtre présente une allure analogue à celle des filtres de l'invention, mais que la dispersion chromatique a une variation considérable dans la bande passante du filtre. La dispersion chromatique varie dans une plage de ± 250 ps/nm sur une largeur de 0,08 nm. Cette largeur est faible par rapport à la largeur de 0,3 nm du filtre. La variation sur une plage de ± 150 ps/nm est de l'ordre de 0,05 nm, et est donc beaucoup plus faible que la moitié de la bande du filtre. En conséquence, si l'on considère la dispersion chromatique, le filtre n'est utilisable que sur une faible partie de sa largeur effective.

La figure 9 montre le cas d'un filtre présentant une fonction d'apodisation super-gaussienne et un chirp linéaire. Dans ce cas, les caractéristiques du filtre sont les suivantes :

- longueur L du filtre : 50 mm;
- pas du filtre : entre 534 nm et 534,17 nm, avec une variation linéaire;
- largeur du filtre (mesurée à la moitié de l'amplitude maximale) : 0,3 nm;
- amplitude maximale de la modulation d'indice $\Delta n_{max}$ : 3,3.10$^{-4}$;
- coefficient de l'apodisotion Blackman : 0.3

Comme le montre la figure, la dispersion varie sur la bande du filtre. La dispersion chromatique varie dans une plage de ± 150 ps/nm sur une largeur de 0,13 nm; de nouveau, cette plage est moyennenment faible par rapport à la largeur totale du filtre. La dispersion varie dans une plage de ± 250 ps/nm sur une largeur de 0,17 nm. La dispersion chromatique ne varie pas autour d' une valeur fixe Do.

Les filtres de l'invention peuvent être fabriqués par l'homme du métier, grâce aux indications données ci-dessus, en utilisant les procédés de fabrications bien connus en soi.

Bien entendu, la présente invention n'est pas limitée aux exemples et modes de réalisation décrits et représentés, mais elle est susceptible de nombreuses variantes accessibles à l'homme de l'art. Les termes de "début" et de "fin" du réseau sont utilisés à titre de simplification, étant entendu que le réseau s'inscrit dans une fibre, et n'a pas à proprement parler de direction privilégiée. Le sens de la concavité peut donc être inverse de celui qui est représenté sur les figures. Les première et seconde parties du réseau peuvent être inversées par rapport à l'exemple représenté sur les figures.

**Revendications**

1. Un réseau de Bragg de pas variable, caractérisé en ce que le pas est une fonction de la distance présentant une concavité vers le haut sur une première partie du réseau, et vers le bas sur une seconde partie du réseau.

2. Le réseau de la revendication 1, caractérisé en ce que la dite fonction présente une pente nulle aux extrémités du réseau.

3. Le réseau de la revendication 1 ou 2, caractérisé en ce que la première partie s'étend sur une moitié du réseau, et en ce que la deuxième partie s'étend sur l'autre moitié du réseau.

4. Le réseau de la revendication 1, 2 ou 3, caractérisé en ce que le pas est une fonction quadratique de la distance sur la première partie, et une fonction quadratique de la distance sur la seconde partie.

5. Le réseau de la revendication 1, 2 ou 3, caractérisé en ce que le pas est sur la première partie une fonction polynomiale de la distance, de degré inférieur à 6, et sur la seconde partie une fonction polynomiale de la distance, de degré inférieur à 6.

6. Le réseau de la revendication 1, 2, 4 ou 5, caractérisé en ce que le pas est une fonction linéaire de la distance sur une troisième partie du réseau s'étendant entre les dites première et seconde parties.

7. Le réseau de l'une des revendications précédentes, caractérisé en ce que la tangente à la courbe donnant le pas en fonction de la distance présente à chaque extrémité du réseau, sur une distance inférieure à 10% de la longueur L du réseau, une pente inférieure en valeur absolue à la moitié du rapport $(\Lambda_{max} - \Lambda_{min})/L$ entre la variation de pas et la longueur du réseau.

8. Le réseau de l'une des revendications précédentes, caractérisé en ce qu'il présente une variation de dispersion chromatique comprise dans une plage de ± 150 ps/nm pour une plage de longueur d'onde égale à au moins la moitié de sa largeur à -3dB.

9. Le réseau de l'une des revendications précédentes, caractérisé en ce qu'il présente un rapport entre sa largeur à -3 dB et sa largeur à -30 dB compris entre 0.5 et 1

10. Le réseau de l'une des revendications précédentes, caractérisé en ce que l'atténuation en réflexion à 25 GHz de la longueur d'onde centrale du filtre est supérieure à 30 dB, de préférence supérieure à 35 dB.

11. Le réseau de l'une des revendications 1 à 9, caractérisé en ce que l'atténuation en réflexion à 50 GHz de la longueur d'onde centrale du filtre est supérieure à 30 dB, de préférence supérieure à 35 dB.

12. Le réseau de l'une des revendications précédentes, caractérisé par en ce que l'atténuation en transmission à la longueur d'onde centrale du filtre est inférieure à 0,05 dB.

13. Le réseau de l'une des revendications précédentes, caractérisé par une apodisation super-gaussienne, avec un coefficient a dans l'intervalle [0,5; 1].

14. Le réseau de l'une des revendications 1 à 12, caractérisé par une apodisation de Blackman, avec un coefficient de Blackman dans l'intervalle ]0; 0,2[.

15. Le réseau de l'une des revendications 1 à 12, caractérisé par une apodisation en tangente hyperbolique, avec un coefficient dans l'intervalle ]0; 1[.

16. Un filtre optique comprenant un réseau de Bragg selon l'une des revendications précédentes.

17. Un système de transmission à multiplexage en longueurs d'onde, comprenant au moins un réseau de Bragg selon l'une des revendications 1 à 15.

Figure 1

Figure 2

Figure 3

Figure 4

Figure 5

Figure 6

Figure 7

Figure 8

Figure 9

**Office européen des brevets**

**RAPPORT DE RECHERCHE EUROPEENNE**

Numéro de la demande

EP 00 40 2705

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 091 916 A (CIMINI JR LEONARD J ET AL) 25 février 1992 (1992-02-25) * colonne 5, ligne 27 - colonne 7, ligne 65; figures 6-8 *<br>--- | 1-17 | G02B5/28 G02B5/18 H04J14/02 G02B6/12 G02B6/16 G02B6/34 |
| A | EP 0 607 782 A (HITACHI LTD) 27 juillet 1994 (1994-07-27) * colonne 3, ligne 48 - colonne 7, ligne 9; figures 1-4 *<br>--- | 1-17 | |
| A | WO 99 31537 A (UNIV SOUTHERN CALIFORNIA) 24 juin 1999 (1999-06-24) * page 9, ligne 1 - page 20, ligne 11; figures 1-13 *<br>--- | 1-17 | |
| A | EP 0 940 695 A (DAINIPPON PRINTING CO LTD) 8 septembre 1999 (1999-09-08) * colonne 5, ligne 34 - colonne 9, ligne 11; figures 1-5 *<br>--- | 1-17 | |
| A | FR 2 768 233 A (FURUKAWA ELECTRIC CO LTD) 12 mars 1999 (1999-03-12) * page 10, ligne 29 - page 22, ligne 16; figures 1-4 *<br>----- | 1-17 | **DOMAINES TECHNIQUES RECHERCHES (Int.Cl.7)**<br>G02B |

Le présent rapport a été établi pour toutes les revendications

| Lieu de la recherche | Date d'achèvement de la recherche | Examinateur |
|---|---|---|
| LA HAYE | 17 novembre 2000 | Sarneel, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 2705

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-11-2000

| Document brevet cité au rapport de recherche | | Date de publication | Membre(s) de la famille de brevet(s) | | Date de publication |
|---|---|---|---|---|---|
| US 5091916 | A | 25-02-1992 | JP | 2851957 B | 27-01-1999 |
| | | | JP | 4262586 A | 17-09-1992 |
| EP 0607782 | A | 27-07-1994 | JP | 6216467 A | 05-08-1994 |
| | | | DE | 69419626 D | 02-09-1999 |
| | | | US | 5570439 A | 29-10-1996 |
| WO 9931537 | A | 24-06-1999 | US | 5982963 A | 09-11-1999 |
| | | | AU | 2086899 A | 05-07-1999 |
| | | | EP | 1040377 A | 04-10-2000 |
| EP 0940695 | A | 08-09-1999 | JP | 11072631 A | 16-03-1999 |
| | | | WO | 9901787 A | 14-01-1999 |
| FR 2768233 | A | 12-03-1999 | JP | 11084158 A | 26-03-1999 |
| | | | CA | 2246473 A | 10-03-1999 |
| | | | US | 6084993 A | 04-07-2000 |

EPO FORM P0460

Pour tout renseignement concernant cette annexe : voir Journal Officiel de l'Office européen des brevets, No.12/82